Europäisches Patentamt

European Patent Office

Office européen des brevets

(19)

(11) Publication number: **0 177 273 B1**

(12) # EUROPEAN PATENT SPECIFICATION

(45) Date of publication of patent specification: **27.02.91**  (51) Int. Cl.⁵: **G01N 21/88**, G01B 11/02, G02B 27/10, H04N 5/335

(21) Application number: **85306844.3**

(22) Date of filing: **26.09.85**

(54) **Camera for visual inspection.**

(30) Priority: **29.09.84 JP 148094/84 U**
**01.02.85 JP 14048/85 U**
**01.02.85 JP 14049/85 U**
**19.04.85 JP 59355/85 U**

(43) Date of publication of application:
**09.04.86 Bulletin 86/15**

(45) Publication of the grant of the patent:
**27.02.91 Bulletin 91/09**

(84) Designated Contracting States:
**CH DE FR GB LI**

(56) References cited:
**US-A- 3 956 636**
**US-A- 4 291 334**
**US-A- 4 403 858**

(73) Proprietor: **NGK INSULATORS, LTD.**
**2-56, Suda-cho, Mizuho-ku**
**Nagoya-shi, Aichi 467(JP)**

(72) Inventor: **Matsuo, Junichi**
**88, Aza-Saruta 5-chome Ohaza-Fukuzumi**
**Agui-Cho, Chita-Gun Aichi Pref.(JP)**
Inventor: **Muto, Sadanari**
**2-6, Fujiyamadai 8-Chome**
**Kasugai City Aichi Pref.(JP)**

(74) Representative: **Paget, Hugh Charles Edward et al**
**MEWBURN ELLIS & CO. 2/3 Cursitor Street**
**London EC4A 1BQ(GB)**

## Description

The present invention relates to a camera for visual inspection to be used for optically inspecting for surface defects, e.g. on an object having a complicated outer configuration.

A conventional camera for visual inspection used for checking defects on a sheet, such as a glass sheet or a steel sheet, comprises linear image sensors, for example as described in GB-A-1453 341, having a plurality of sensor elements arranged linearly on the optical axis of the lens of the camera. However, this kind of camera converts the brightness of the surface of an object directly into an electrical signal. Therefore it has the essential disadvantage, when used for an object having a complicated or rugged surface such as an insulator, that it cannot distinguish brightness variation due to the presence of a defect from brightness variation caused by uneven illumination. To reduce this disadvantage, the inventors have considered a visual sensor system in which two linear image sensing devices are closely arranged on the focus plane of a camera in parallel direction to the plane and the influence of uneven illumination is cancelled by taking the difference between the output signals derived from the two linear image sensing devices.

However, a conventional linear image sensing device is usually equipped with a transfer gate and a shift register around the light receiving portion so that it cannot be arranged closer to another such device than a certain distance, of the order of about 10 mm, the overall width of the device already being of the order of 10mm. If the magnification of the lens is assumed to be M, the devices can be arranged to compare the brightness on lines spaced apart by 10xM mm from each other on the surface of the object. Accordingly, it has turned out that measuring accuracy cannot be improved over a certain value. Furthermore, although linear image sensing devices are manufactured under conditions of very strict quality control, the light sensitivity may vary in a range of a few percent along the direction of the array of sensor elements. So there is also a problem of deterioration of inspection accuracy when two linear image sensing devices having different sensitivity characteristics are used.

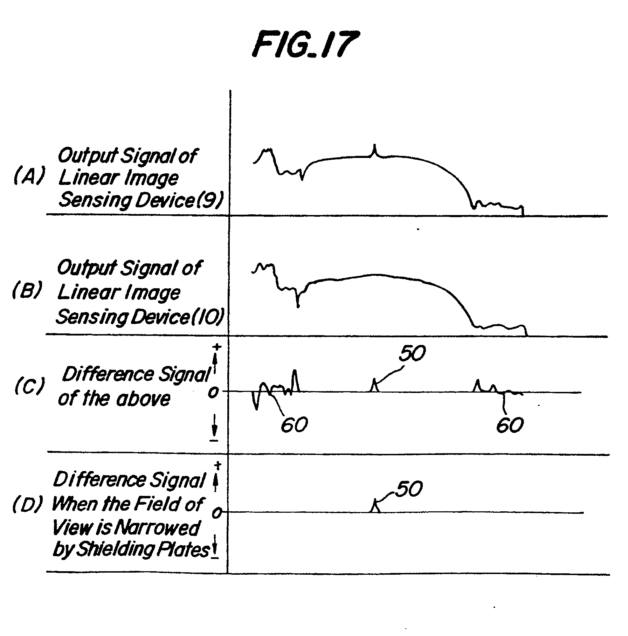

Furthermore, to inspect all the outer surface of an object having a complicated and rugged surface configuration such as an insulator, it is necessary to use a plurality of cameras as shown in Fig. 16 of the accompanying drawings. In this case, the required field of view for each one of the cameras varies greatly so that if cameras having a same view angle are used, the distance between the camera and the object must vary from one camera to another and hence the magnification of the camera varies. This creates a problem of variation of the inspection accuracy. If the cameras are arranged at a certain constant distance from the object, there will be a case in which a portion of the surface other than the desired surface for inspection is included in the field of view of a camera as shown by the dotted lines in Fig. 16. It has turned out that accurate inspection is not possible in such a case since some spurious noise waveforms, resembling defect signals, appear at both extremities of the field of view of the camera as can be seen from lines (A) to (C) in Fig. 17.

The present invention is intended to mitigate the above-mentioned problems in the conventional inspection system. The invention has as its object the realisation of a camera for visual inspection for defects on the surface of an object which may use conventional linear image sensing devices, and the achievement of the comparison of brightness on two close lines on the surface of the object.

Accordingly the invention provides a camera for inspecting an article for surface defects, comprising a camera body, a lens mounted on the body and providing an optical axis, and a linear image sensing device positioned in the body to receive light passing through the lens from an inspected article and sense a linear image thereof, characterised in that beam dividing means are provided in the camera body at the optical axis to divide light passing in through the lens into two selected portions symmetrically about a line intersecting the optical axis normally, and two linear sensing devices are arranged in the camera body so as to receive respective ones of said selected portions of light and thereby sense linear images of two closely adjacent lines on the inspected article, whereby a signal indicating defects is obtainable by direct comparison between the output signals of the two sensing devices.

In the prior art, US-A-4291334 shows use of a dividing mirror having two surfaces, for directing respective area images from a semiconductor chip away from a lens optical axis towards respective video cameras which compare the images with pre-recorded images to determine the position and orientation of the chip.

US-A-3956636 uses a four-surface mirror to divide beams transmitted through the four holes of a sample clothes button and direct them to respective photodetectors to determine whether the button is faulty.

In a preferred form of this invention, the beam dividing means is a reflecting mirror having two symmetrical reflecting surfaces extending at equal angles to the optical axis of the lens of the camera and forming a vertex intersecting the optical axis normally, and two linear image sensing devices are arranged at spaced locations in the camera body, e.g. the inner surface of the body, to receive the light reflected from said two reflecting surfaces respectively.

The invention may be further characterised by the following preferred optional features:-

a fine adjustment mechanism for adjusting the position of at least one linear image sensing device in the longitudinal direction of its array of sensor elements;

a light quantity adjusting filter having darkness distribution corresponding to the pattern of variation of the sensitivity characteristics along the longitudinal direction of the array of sensor elements at least one of the linear image sensing devices, in front of said at least one of the devices to compensate at least partially for such variation, and

shielding plates arranged movably towards each other in the longitudinal direction of the array of sensor elements in front of and in close proximity to each of the linear image sensing devices.

Embodiments of the invention will now be desribed by way of example with reference to the accompanying drawings, in which:-

Fig. 1 is a horizontal cross-sectional view showing a first embodiment of the invention;

Fig. 2 is a vertical cross-sectional view of the same;

Fig. 3 is a horizontal cross-sectional view showing a second embodiment of the invention;

Fig. 4 is a vertical cross-sectional view of the same;

Fig. 5 is a horizontal cross-sectional view of an embodiment having with a fine adjustment mechanism for moving the mount of the linear image sensing device;

Fig. 6 is a vertical cross-sectional view thereof;

Fig. 7 is a horizontal cross-sectional view showing an embodiment of the invention in which light shielding plates are arranged in front of the linear image sensing device;

Fig. 8 is a vertical cross-sectional view thereof;

Fig. 9 is also the same vertical cross-sectional view as Fig. 8 in the case where the field of view is made narrower;

Figs. 10, 11 and 12 are diagrams showing variation in the pattern of sensitivity characteristics of the linear image sensing device together with simplified diagram of the corresponding light adjusting filters;

Fig. 13 is a perspective view patially in crosssection showing a manner of use of a camera for visual inspection according to the present invention;

Fig. 14 is a waveform diagram showing the output signals and the difference signal of respective image sensing devices;

Fig. 15 is a block diagram for showing the overall system for the signals of Fig. 14;

Fig. 16 is a cross-sectional view for showing a manner of use of a device of the present invention; and

Fig. 17 is a waveform diagram of the output signal and the difference signal of respective image sensing devices in a camera of the invention wherein the light shielding plates are arranged in front of the linear image sensing device.

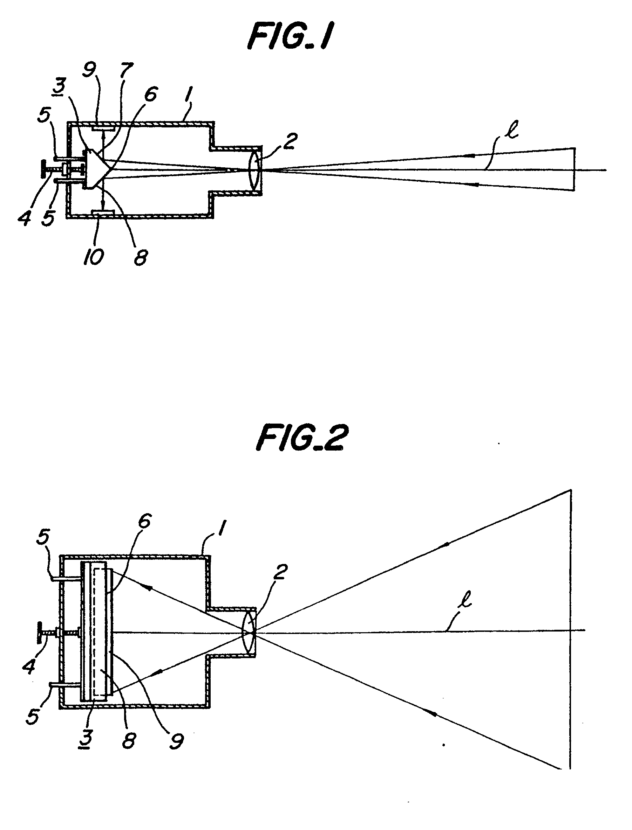

Referring to Figs. 1 and 2, the camera body 1 of the camera for visual inspection illustrated has a lens 2 with an optical axis 1. The camera body 1 further has a reflecting mirror 3 of pentagonal prismatic shape of which the front vertex line 6 is arranged to meet the optical axis 1 and extend normal thereto, and which is mounted so as to be freely movable back and forth along the optical axis by means of a driving screw 4 and guide members 5. This reflecting mirror 3 has two reflecting surfaces 7 and 8 extending symmetrically from the vertex line 6 and at equal inclined angles of $45°$ with respect to the optical axis. Two linear image sensing devices 9 and 10 are arranged on the inner surface of the camera body 1 at locations onto which impinge reflected light from the reflecting surfaces 7 and 8 respectively.

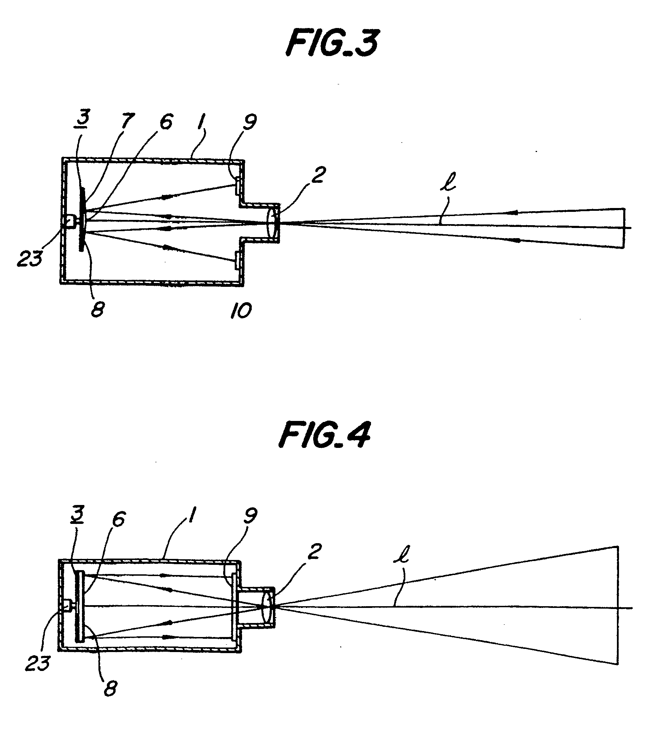

Figs. 3 and 4 show a second embodiment of the present invention. This embodiment has almost the same construction as the first embodiment, except that the symmetrical angles of the reflecting surfaces 7 and 8 of the reflecting mirror 3 to the optical axis 1 of the lens 2 are about $85°$ and the linear image sensing devices 9 and 10 are arranged at the front inner side of the camera body 1. In this second embodiment, the reflecting mirror 3 is attached to a piezoelectric (PZT) actuator 23 by which the reflecting mirror 3 can be moved along the optical axis 1, in order to improve the accuracy of the back and forth movement.

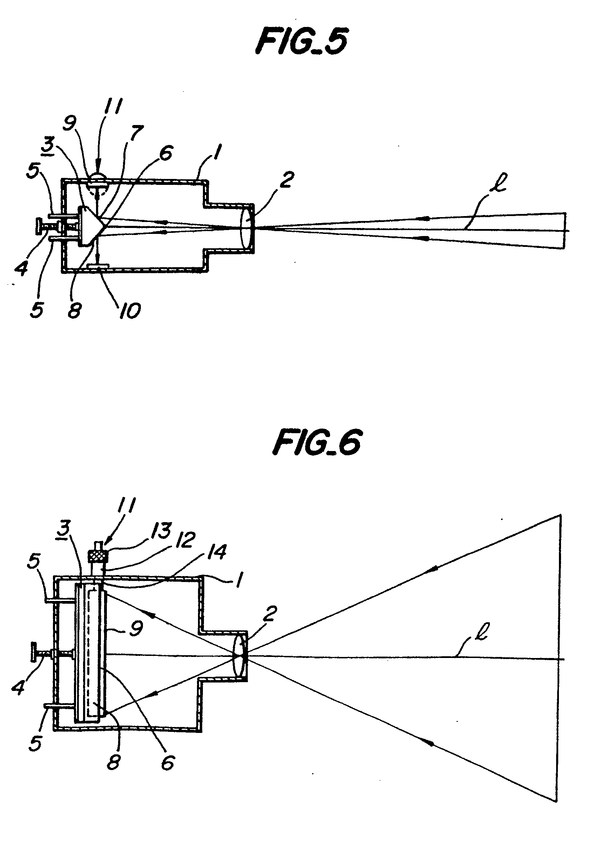

In a further embodiment shown in Figs. 5 and 6, a fine adjustment mechanism 11 is provided for at least one of the two linear image sensing devices for adjusting the mounting location of the sensor element in the longitudinal direction of the array of sensor elements. The fine adjustment mechanism 11 is similar to the driving mechanism of a micrometer and has its outer sleeve 12 fixed on the outer wall of the camera body 1. The linear image sensing device 9 is attached on the end of a spindle 14 in the sleeve 12 and arranged to move with an accuracy of the order of $10\mu m$ by rotation of a thimble 13. A micrometer-type driving mechanism is used for the fine adjustment mechanism 11, but the invention is not limited to this. In this embodiment the other linear image sensing device 10 is assumed to be fixed on the inner surface of the camera body 1, but both linear image sensing devices 9 and 10 may be provided with the fine adjustment mechanisms 11.

Referring now to Fig. 15, the linear image sensing devices 9 and 10 are excited simultaneously by a single clock pulse generator 18 provided in a controlling circuit. The electric signals derived from the respective sensor elements of the sensing devices 9 and 10 are applied to a differential operation processor 19 simultaneously and a difference signal is derived therefrom.

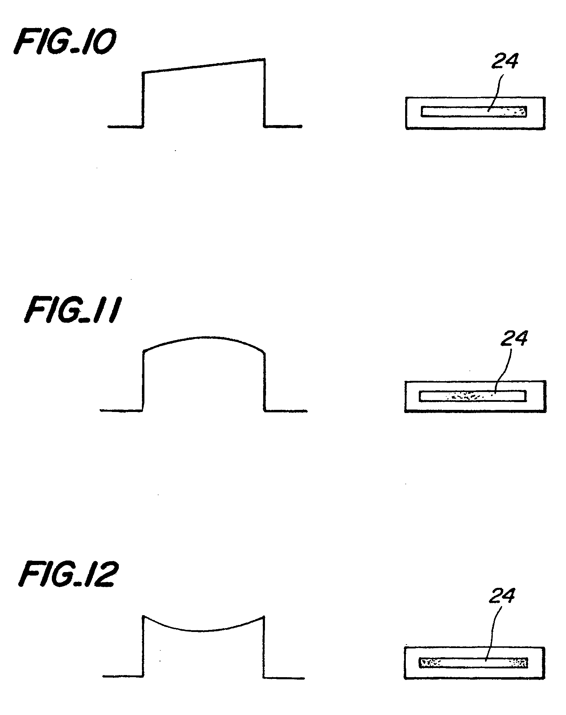

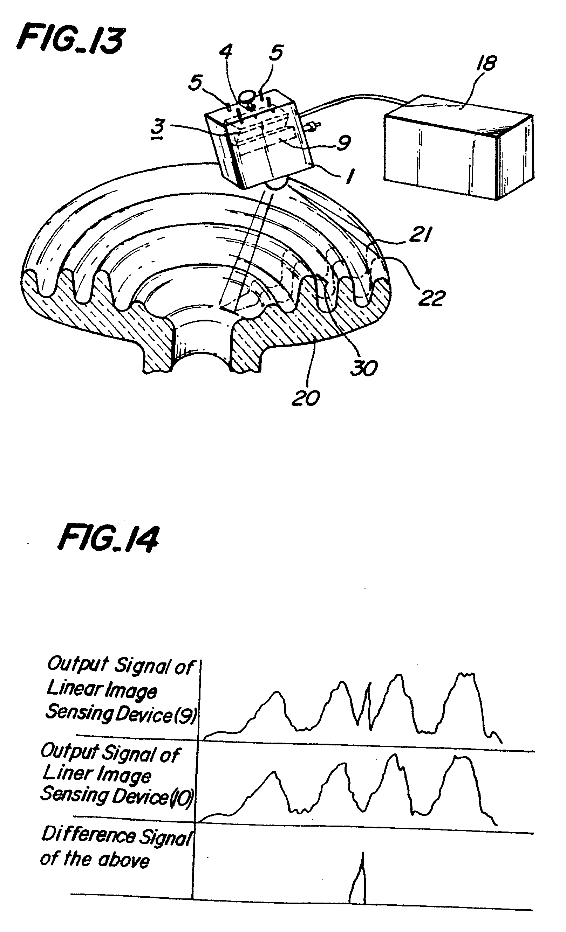

As was mentioned at the outset the optical sensitivity of the linear image sensing devices 9 and 10 may vary along the longitudinal direction of their arrays of sensor elements. In order to compensate for uneveness of the sensitivity characteristics due to this variation, a light quantity adjusting filter 24, e.g. as shown in Figs. 10 to 12, is arranged in front of at least one of the linear image sensing devices. From the experience of the inventors, the variation patterns of the sensitivity characteristics of almost all presently available linear image sensing devices may be classified into 3 types. The first of these types is as shown in Fig. 10, in which the characteristic curve ascends from one end towards the other end linearly. The second is shown in Fig. 11, in which sensitivity at both ends is reduced, and the third is as shown in Fig. 12, in which the sensitivity curve is bent downwardly at the middle. Accordingly, by providing three types of light quantity adjusting filters 24 having complemental darkness distribution with respect to the respective variation pattern of the light sensitivity as shown on the right hand side in the above Figs. 10 to l2, and by selecting in each case a suitable filter 24 having the absorption distribution to match the pattern of the sensitivity characteristics of the linear image sensing devices, the effective light sensitivity of the linear image sensing devices 9 and 10 can be made substantially uniform along the whole length thereof.

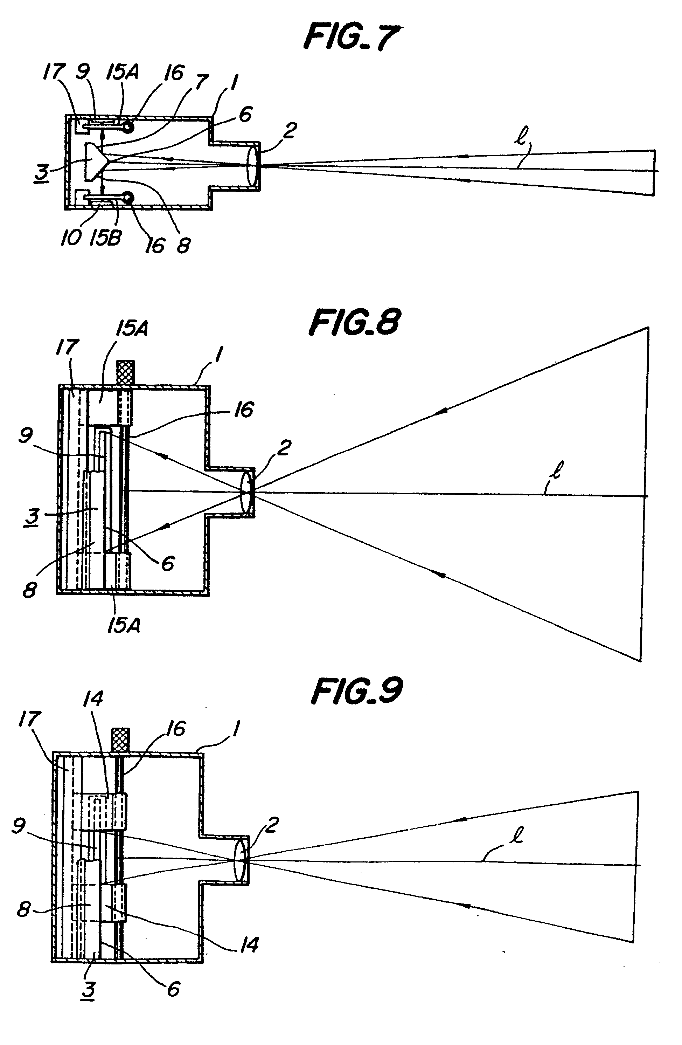

In a further embodiment shown in Figs. 7 to 9, shielding plates 15A and 15B are arranged very close in front of the respective linear image sensing devices 9 and 10, and for each sensing device are movable towards each other in the longitudinal direction of the array of the sensor elements. As can be seen more clearly from Fig. 8, the shielding plates for the linear image sensing device 9 consist of a pair of plates both designated as 15A, arranged at the upper side and the lower side respectively in the vertical cross-sectional view. The base end portions of the shielding plates 15A are supported by a driving screw 16 extending parallel to the longitudinal direction of the array of sensor elements and the other free end portions are retained in a vertical groove of a column member 17 allowing free sliding movement. In the present embodiment, which is particularly shown in Fig. 8, the driving screw 16 is provided with opposite-hand screws at its upper half and lower half portions, so that the pair of shielding plates 15A and 15A may simultaneously be moved equal distances in opposite directions. The driving screws 16 located on either side of the optical axis 1 may be coupled by means of for instance belts, chain, etc. , so as to move the two pairs of shielding plates 15A, 15A and 15B, 15B simultaneously. The upper shielding plate and the lower shielding plate may alternatively be arranged to be driven so as to move independently.

By adjustment of the shielding plates, the fields of view of the respective linear image sensing devices 9 or 10 may be varied selectively. If the distance between the shielding plates and the linear image sensing device is large, the image at the boundaries may become unclear. Therefore, it is better to arrange the shielding plates 15A and l5B as close as possible in front of the linear image sensing devices 9 and 10.

The operation of the illustrated cameras of the invention for visual inspection will now be explained.

The camera of the invention is mounted over the object 20 to be inspected, such as a suspension insulator as shown in Fig. 13, with the longitudinal direction of the vertex 6 of the reflecting mirror 3 corresponding to a radial direction of the insulator 20. The insulator 20 is rotated and the reflected light from the surface of the insulator is received by the lens 2. The incident light from the lens 2 is split into two portions by the two symmetrical reflecting surfaces 7 and 8 which are inclined at equal angles to the optical axis 1 with the vertex 6 normal to the optical axis 1. The two light beams are received by the respective linear image sensing devices 9 and 10, arranged at their separate positions on the inner surface of the camera body 1. The light received is converted into electric signals representing luminance variation in the radial direction and are processed in the signal processor 18. As can be understood from Figs. 1 and 3, light beams along paths deviating slightly either to right or to left from the optical axis 1 are reflected by the corresponding reflecting surface 7 or 8 towards the corresponding linear image sensing device 9 or 10. In the present invention, the splitting of light beams having very minor deviation angles from the optical axis is effected by the reflecting mirror 3. Accordingly, the linear image sensing devices 9 and 10 need not be arranged very close to each other as in the case of the conventional devices. The respective brightnesses of two lines 21 and 22 close to each other on the object 20 can clearly be observed and are converted into two electric signals by the linear image sensing devices 9 and 10. By arranging the reflecting mirror 3 to be capable of movement along the optical axis 1, the spacing of such compared lines 21 and 22 on the surface of the object 20 can be varied over a certain limited range. This is for the reason that by advancing the reflecting mirror 3 towards the object 20, light paths incident on the linear image sensing devices 9 and 10 are those further from the optical axis 1. If the reflecting mirror 3 is retracted, light beams on light paths closer to the optical axis are incident on the linear image sensing devices 9 and 10.

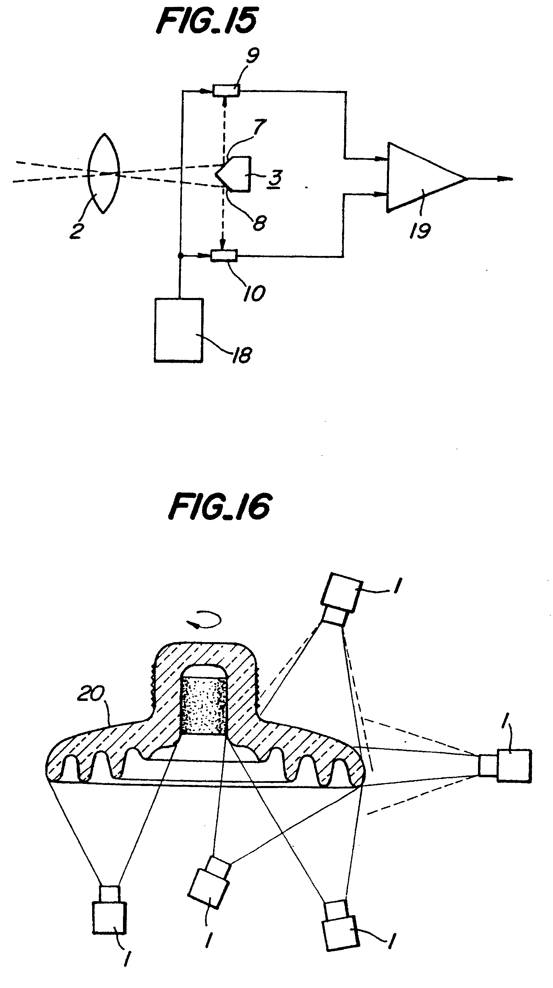

The two output signals from the linear image sensing devices 9 and 10 may vary in the radial direction of the object, but the output signals from the corresponding sensor elements on the respective linear image sensing devices 9 and 10 are identical when no defect exists. Therefore, if we obtain a difference between the output signal from the linear image sensing device 9 and that from the linear image sensing device 10, the processed difference signal in such a case will have value zero. In contrast, if there is a defect 30 on the surface of the object 20 as shown in Fig. 13, the output signal of the linear image sensing device 9 representing the image on the line 21 will be a waveform including a brightness variation as shown in the top line Fig. 14 and the output signal of the linear image sensing device 10 representing the image on the line 22 will be a waveform as shown in the second line of Fig. 14. Accordingly, by obtaining the difference between the two signals, a signal representing only the defect as shown in the bottom line of Fig. 14 can be derived. Moreover, the spacing between the two lines 21 and 22 being compared can be made very small so that even a very small defect 30 can be identified and the inspection accuracy can be remarkably higher than with the conventional system.

Instead of using the reflecting mirror 3, it is possible to use an image guide consisting of optical fibers having two split tops e.g. adjacent light-receiving ends to guide the divided light beams to the linear image sensing devices. Because of the potential complexity of such a construction, however, the use of a reflecting mirror 3 as in the present embodiment of the invention is preferred for practical reasons.

In the camera according to the present invention, it is required that the images of two adjacent points on the surface of the object 20 are accurately focused on the corresponding sensor elements arranged on the two linear image sensing devices. However, since the linear image sensing devices are individually attached on separate locations on the inner side of the camera body 1, achieving the correct alignment may sometimes be difficult. In more detail, a sensor element has a size of only 10μm or so, so that if there is a deviation of the arrangement of about 10μm along the longitu-

dinal direction of the array of sensor elements of the linear image sensing devices 9 and 10, the devices may produce a defect signal caused by variation of illumination due to brightness deviations, despite the fact that there is no defect on the surface of the object 20. In the present invention, there is preferably provided a fine adjustment mechanism at least for one of the linear image sensing devices 9 and 10, so that inaccuracy of the relative mounting positions of the linear image sensing devices 9 and 10 may be compensated by moving one of the devices, for instance, the sensing device 9, in the longitudinal direction of the array of sensor elements to an accuracy of order of about 10μm. By this arrangement, possible deterioration of inspection accuracy due to the arrangement of the linear image sensing devices 9 and 10 at spaced locations of the camera body 1 can be prevented or minimised.

Furthermore, by using incident light adjusting filters 24 having darkness variation corresponding to the pattern of variation of sensitivity characteristics of the sensor elements along the longitudinal direction of the array as seen in Figs. 10 to 12, both the linear image sensing devices may be given uniform apparent sensitivity characteristics along their whole length. By this measure, the deterioration of inspection accuracy due to a difference of sensitivity characteristics between the linear image sensing devices 9 and 10 can be minimised or even completely avoided.

In the inspection of suspension insulators in practice in a manufacturing line, a plurality of cameras of this kind are used for the inspection of the whole surface of the insulators as shown in Fig. 16. In order that the magnification of each camera is identical, the distance between the cameras and the object 20 must be substantially constant. In this case, portions of the surface other than that required to be inspected may also fall in the field of view of the camera so that unwanted spurious noise waveforms may be induced at both extremities of the two linear image sensing devices, as can be seen from Fig. 17. Such unwanted noises 60 may remain even in the difference signal shown in the third line of Fig. 17. In preferred embodiments of the present invention, pairs of shielding plates 15A, 15A or 15B, 15B arranged very closely in front of the linear image sensing device 9 or 10 may be adjusted to move in the direction of the array of sensor elements by means of the driving screw 16, so that the field of view of each camera is restricted in order to prevent the incidence of light coming from other than the surface to be inspected as shown by the full line in Fig. 16. With this adjustment, the noise waveform will not be produced in either of the linear image sensing devices 9 and 10 and only the wanted difference signal 50 can be derived, as shown in Fig. 17 line (D). The adjustment of the field of view can be effected at each of the cameras, so that both a wide field of view and a narrow field of view can be inspected using just one camera design.

With the present invention, defects on the whole surface of an object may be inspected while using one design of camera without affecting the inspection accuracy, so that the invention is particularly useful in cameras used for accurately inspecting for the presence of defects on an object having a complicated rugged outer configuration, such as an insulator or the like, in an on-line inspecting system.

## Claims

1. A camera for inspecting an article for surface defects, comprising a camera body (1), a lens (2)) mounted on the body (1) and providing an optical axis, and a linear image sensing device (9,10) positioned in the body (1) to receive light passing through the lens (2) from an inspected article and sense a linear image thereof, characterised in that beam dividing means (3) are provided in the camera body (1)at the optical axis to divide light passing in through the lens (2) into two selected portions symmetrically about a line intersecting the optical axis normally, and two linear, sensing devices (9,10) are arranged in the camera body (1) so as to receive respective ones of said selected portions of light and thereby sense linear images of two closely adjacent lines on the inspected article, whereby a signal indicating defects is obtainable by direct comparison between the output signals of the two sensing devices (9, 10).

2. A camera for inspecting an article for surface defects, comprising a camera body (1), a lens (2) mounted on the body (1) and providing an optical axis, and a linear image sensing device (9,10) positioned in the body (1) to receive light passing through the lens (2) from an inspected article and sense a linear image thereof, characterised in that a reflecting mirror (3) having two symmetrical reflecting surfaces (7,8) inclined at equal angles with respect to the optical axis and forming a vertex (6) intersecting the optical axis normally is provided in the camera body (1), to divide light passing in through the lens (2) into two selected portions about a line intersecting the optical axis normally, and two linear sensing devices (9,10) are arranged at spaced locations in the camera body (1) so as to receive respective ones of said selected portions of light and thereby sense linear images of two closely adjacent lines on the inspected article, so that a signal indicating defects is obtainable by a direct comparison between the output signals of the two sensing devices (9, 10).

3. A camera according to claim 1 or claim 2 in which the beam dividing means or reflecting mirror (3) is adjustable in position along the optical axis.

4. A camera according to any of the preceding claims in which the position in the camera body (1) of at least one of the linear image sensing devices (9,10) is adjustable, in the longitudinal direction of its array of sensor elements, by a fine adjustment mechanism (11).

5. A camera according to any one of the preceding claims in which at least one of the linear image sensing devices (9,10) is provided with a light quantity adjusting filter (24) having varying darkness distribution to compensate at least partly for variation of sensitivity characteristics in the longitudinal direction of the array of sensor elements of the linear image sensing device (9,10).

6. A camera according to any one of the preceding claims in which each of the linear image sensing devices (9,10) is provided with shielding plates (15A, 15B) movable in the longitudinal direction of the array of sensor elements of the sensing device in front of and in close proximity thereto.

7. A method of inspecting an article for surface defects, comprising scanning the surface of the article with a camera according to any one of claims 1 to 6 and monitoring a difference signal between the outputs of the two linear image sensing devices (9,10) thereof.

## Revendications

1. Une caméra pour l'inspection sur un article des défauts de surface, comprenant un corps de caméra (1), une lentille (2) montée dans le corps (1) et pourvue d'un axe optique, et un dispositif de détection linéaire d'image (9, 10) positionné dans le corps (1) pour recevoir la lumière passant à travers la lentille (2) provenant d'un article inspecté et détecter une image Linéaire de celle-ci, caractérisée en ce que les moyens diviseur de faisceaux (3) sont pourvus dans le corps de caméra (1) sur l'axe optique pour diviser la lumière passant à travers la lentille (2) en deux parties sélectionnées symétriquement par rapport à une ligne coupant l'axe optique normalement, et deux dispositifs de détection linéaire (9, 10) sont agencés dans le corps de caméra (1) de façon à recevoir des parties sélectionnées respectives de lumière et de ce fait détecter les images linéaires de deux lignes adjacentes étroitement sur l'article inspecté, dans lequel un signal indiquant les défauts peut être obtenu par comparaison directe entre les signaux de sortie de deux dispositifs de détection (9, 10).

2. Une caméra pour l'inspection des défauts de surface d'un article comprenant un corps de caméra (1), une lentille (2) montée dans le corps (1) et fournissant un axe optique, et un dispositif de détection d'image linéaire (9, 10) positionné dans le corps (1) pour recevoir la lumière passant à travers la lentille (2) provenant d'un article inspecté et détecter une image linéaire de celle-ci, caractérisée en ce qu'un miroir réfléchissant (3) ayant deux surfaces réfléchissantes symétriques (7, 8) inclinées à des angles égaux eu égard à l'axe optique et formant une ligne de sommet (6) coupant l'axe optique normalement est prévue dans le corps de caméra (1), pour diviser la lumière passant à travers la lentille (2) en deux parties sélectionnées par rapport à une ligne coupant l'axe optique normalement, et les deux dispositifs de détection linéaires (9, 10) sont agencés à des localisations espacées dans le corps de caméra (1) de façon à recevoir les parties sélectionnées respectives de lumière et de ce fait détecter les images linéaires de deux lignes étroitement adjacentes sur l'article inspecté, pour qu'un signal indiquant les défauts puisse être obtenu par une comparaison directe entre les signaux de sortie de deux dispositifs de détection (9, 10).

3. Une caméra selon la revendication 1 ou 2, dans laquelle le moyen divisant le faisceau ou le miroir réfléchissant (3) est réglable en position le long de l'axe optique.

4. Une caméra selon l'une quelconque des revendications précédentes, dans laquelle la position dans le corps de caméra (1) d'au moins un des dispositifs de détection d'image linéaires (9, 10), est réglable, dans la direction longitudinale ce son rang d'éléments de capteurs, par un mécanisme de réglage fin (11).

5. Une caméra selon l'une quelconque des revendications précédentes, dans laquelle au moins un des dispositifs de détection d'image linéaires (9, 10) est prévu avec un filtre de réglage de la quantité de lumière (24) ayant une distribution d'obscurité variant pour compenser au moins partiellement la variation des caractéristiques de sensibilité dans la direction longitudinale du rang d'éléments de capteur du dispositif de détection d'image linéaire (9, 10).

6. Une caméra selon l'une quelconque des revendications précédentes, dans laquelle chacun des dispositifs de détection d'image linéaires (9, 10) est prévu avec des tôles de protection (15A, 15B) déplaçables dans la direction longitudinale du rang d'éléments de capteur du dispositif de détection devant et à proximité étroite de celui-ci.

7. Méthode d'inspection des défauts de surface d'un article, consistant à examiner la surface de l'article avec une caméra selon l'une quelconque des revendications 1 à 6 et contrôler un signal de différence entre les sorties des deux dispositifs de détection d'image linéaires (9, 10).

**Ansprüche**

1. Kamera zur Untersuchung eines Gegenstandes auf Oberflächendefekte, mit einem Kamerakörper (1), einem an dem Körper (1) angebrachten und eine optische Achse bestimmenden Objektiv (2) und einer in dem Körper (1) angeordneten linearen Bilderfassungseinrichtung (9, 10) zum Empfangen von durch das Objektiv (2) eintretendem Licht von einem untersuchten Gegenstand und Erfassen eines linearen Bildes desselben, dadurch gekennzeichnet, daß in dem Kamerakörper (1) auf der optischen Achse eine Strahlteilereinrichtung (3) vorgesehen ist, zum Teilen des durch das Objektiv (2) eintretenden Lichts in zwei ausgewählte Anteile symmetrisch bezüglich einer die optische Achse senkrecht schneidenden Linie, und zwei lineare Erfassungseinrichtungen (9, 10) in dem Kamerakörper (1) so angeordnet sind, daß sie jeweils einen der ausgewählten Anteile des Lichts empfangen und dadurch lineare Bilder von zwei nahe benachbarten Linien auf dem untersuchten Gegenstand erfassen, wodurch ein Defekte anzeigendes Signal durch direkten Vergleich zwischen den Ausgangssignalen der beiden Erfassungseinrichtungen (9, 10) erzielbar ist.

2. Kamera zur Untersuchung eines Gegenstandes auf Oberflächendefekte mit einem Kamerakörper (1), einem an dem Körper (1) angebrachten und eine optische Achse bestimmenden Objektiv (2) und einer in dem Körper (1) angeordneten linearen Bilderfassungseinrichtung (9, 10) zum Empfangen von durch das Objektiv (2) eintretendem Licht von einem untersuchten Gegenstand und Erfassen eines linearen Bildes desselben, dadurch gekennzeichnet, daß in dem Kamerakörper (1) ein reflektierender Spiegel (3) mit zwei symmetrischen reflektierenden Oberflächen (7, 8), die um gleiche Winkel bezüglich der optischen Achse geneigt sind und einen die optische Achse senkrecht schneidenden Scheitel (6) bilden, zum Teilen des durch das Objektiv (2) eintretenden Lichts in zwei ausgewählte Anteile um eine die optische Achse senkrecht schneidende Linie vorgesehen ist, und zwei lineare Erfassungseinrichtungen (9, 10) an beabstandeten Orten in dem Kamerakörper (1) so angeordnet sind, daß sie jeweils einen der ausgewählten Anteile des Lichts empfangen und dadurch lineare Bilder von zwei nahe benachbarten Linien auf dem untersuchten Gegenstand erfassen, so daß ein Defekte anzeigendes Signal durch einen direkten Vergleich zwischen den Ausgangssignalen der beiden Erfassungseinrichtungen (9, 10) erzielbar ist.

3. Kamera nach Anspruch 1 oder Anspruch 2, bei der die Strahlteilereinrichtung oder der reflektierende Spiegel (3) in seiner Position längs der optischen Achse einstellbar ist.

4. Kamera nach einem der vorhergehenden Ansprüche, bei der die Position mindestens einer der linearen Bilderfassungseinrichtung (9, 10) in der Längsrichtung ihrer Anordnung von Sensorelementen in dem Kamerakörper (1) durch einen Feineinstellmechanismus (11) einstellbar ist.

5. Kamera nach einem der vorhergehenden Ansprüche, bei der mindestens eine der linearen Bilderfassungseinrichtungen (9, 10) mit einem Lichtmengeneinstellfilter (24) mit variierender Schwärzeverteilung versehen ist, um zumindest teilweise eine Variation der Empfindlichkeitseigenschaften in der Längsrichtung der Anordnung von Sensorelementen der linearen Bilderfassungseinrichtung (9, 10) zu kompensieren.

6. Kamera nach einem der vorhergehenden Ansprüche, bei dem jede der linearen Bilderfassungseinrichtung (9, 10) an der Vorderseite und in unmittelbarer Nähe derselben mit Blendenplatten (15A, 15B) versehen ist, die in der Längsrichtung der Anordnung von Sensorelementen der Erfassungseinrichtungen beweglich sind.

7. Verfahren zur Untersuchung eines Gegenstandes auf Oberflächendefekte, enthaltend das Abtasten der Oberfläche des Gegenstandes mit einer Kamera nach einem der Ansprüche 1 bis 6 und Überwachen eines Differenzsignals zwischen den Ausgängen der beiden linearen Bilderfassungseinrichtungen (9, 10) derselben.

# FIG.1

# FIG.2

# FIG.3

# FIG.4

## FIG.5

## FIG.6

## FIG.7

## FIG.8

## FIG.9

12

**FIG.10**

**FIG.11**

**FIG.12**

## FIG.13

## FIG.14

| Output Signal of Linear Image Sensing Device (9) | |
| --- | --- |
| Output Signal of Liner Image Sensing Device(10) | |
| Difference Signal of the above | |

14

FIG.15

FIG.16

# FIG. 17

(A) Output Signal of Linear Image Sensing Device (9)

(B) Output Signal of Linear Image Sensing Device (10)

(C) Difference Signal of the above

50

60

60

(D) Difference Signal When the Field of View is Narrowed by Shielding Plates

50